(19)

**Europäisches Patentamt**
**European Patent Office**
**Office européen des brevets**

(11) **EP 4 455 171 A1**

(12) **EUROPEAN PATENT APPLICATION**

(43) Date of publication:
**30.10.2024 Bulletin 2024/44**

(21) Application number: **23170828.0**

(22) Date of filing: **28.04.2023**

(51) International Patent Classification (IPC):
***C08F 210/16*** (2006.01)      ***C08L 23/08*** (2006.01)

(52) Cooperative Patent Classification (CPC):
(C-Sets available)
**C08F 210/16; C08L 23/0815;** B29C 45/0001;
B65D 39/00; B65D 41/00; C08F 110/02;
C08L 2205/025; C08L 2205/03; C08L 2207/062;
C08L 2314/02                                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
• **WANG, Jingbo**
  **4021 Linz St.-Peter-Strasse 25 (AT)**
• **POTTER, Elisabeth**
  **4021 Linz St.-Peter-Strasse 25 (AT)**

(74) Representative: **HGF**
**HGF Limited**
**1 City Walk**
**Leeds LS11 9DX (GB)**

(54) **MOULDED ARTICLES**

(57)     The present invention relates to a moulded article comprising a polyethylene composition, said polyethylene composition comprising (A) from 65 to 93 wt%, based on the total weight of the polyethylene composition, of a multimodal high density polyethylene having a density of from 945 to 970 kg/m$^3$, determined according to ISO 1183, and a melt flow rate MFR$_2$ of 0.1 to 1.5 g/10 min, determined according to ISO 1133 at a temperature of 190°C and a load of 2.16 kg; and (B) from 7 to 35 wt%, based on the total weight of the polyethylene composition, of a high density polyethylene having a density of from 955 to 980 kg/m$^3$, determined according to ISO 1183, and a melt flow rate MFR$_2$ of from 15 to 60 g/10 min, determined according to ISO 1133 at a temperature of 190°C and a load of 2.16 kg. The present disclosure also relates to a polyethylene composition that is suitable for producing such a moulded article, and a method of producing such a moulded article.

EP 4 455 171 A1

(52) Cooperative Patent Classification (CPC): (Cont.)

C-Sets
**C08F 210/16, C08F 2/001;**
**C08L 23/0815, C08L 23/06;**
**C08L 23/0815, C08L 23/06, C08L 23/0815;**
**C08L 23/0815, C08L 23/0815, C08L 23/0815;**
C08F 110/02, C08F 2500/12, C08F 2500/02,
C08F 2500/07;
C08F 210/16, C08F 210/08, C08F 2500/12,
C08F 2500/02, C08F 2500/07;
C08F 210/16, C08F 210/08, C08F 2500/12,
C08F 2500/05, C08F 2500/07

C-Sets
**C08F 210/16, C08F 2/001;**

**Description**

**FIELD OF THE INVENTION**

The present disclosure relates to a moulded article comprising a polyethylene composition. The present disclosure also relates to a process for producing such a moulded article. The present disclosure also relates to a polyethylene composition that may be used to produce such a moulded article.

**BACKGROUND**

Injection moulding may be used to make a wide variety of articles including articles having relatively complex shapes and a range of sizes. Injection moulding is, for instance, suited to the manufacture of articles used as caps and closures for food and drink applications, such as for bottles containing carbonated or non-carbonated drinks, or for non-food applications like containers for cosmetics and pharmaceuticals. Injection moulding is for example also used for the production of bottles.

Injection moulding is a moulding process in which a polymer is melted and then filled into a mould by injection. During initial injection, high pressure is used and the polymer melt is compressed. Thus, upon injection into the mould the polymer melt initially expands or "relaxes" to fill the mould. The mould, however, is at a lower temperature than the polymer melt, and therefore as the polymer melt cools, shrinkage tends to occur. To compensate for this effect, back pressure is applied. Thereafter the polymer melt is cooled further to enable the moulded article to be removed from the mould without causing deformation.

A key benefit of manufacturing articles from polyethylene is that it provides an excellent combination of performance and cost. However, sustainability is becoming an increasingly important consideration. It is generally desirable to reduce the amount of polyethylene used to produce articles, for example, by producing articles with reduced weight. It is also generally desirable to make articles more durable so that they can be reused. Both these solutions place material demands on the mechanical properties of the polyethylene. For example, improved stiffness and toughness may be required if less material can be used to manufacture the article. Similarly improved stiffness and toughness may be required if the article is to be suitable for repeated use.

The stiffness of polyethylene can be improved by increasing its density. However, high densities can lead to a deterioration in toughness evidenced, for example, by a decrease in stress cracking resistance. To add to this challenge, the processability of the polymer should be maintained to meet customer needs. Injection moulded articles are produced rapidly and any reduction in processability can increase cycle times and hence reduce process efficiency.

Multimodal high density polyethylene polymers are typically prepared in a multi-stage processes, as described in, for example, WO 2014/180989 A1, WO 2017/093390 A1, WO 2019/229209 and EP2746334. However, these processes may not be suitable for producing polyethylene compositions that provide an adequate balance of stiffness and toughness.

**SUMMARY OF THE INVENTION**

According to a first aspect of the present disclosure, there is provided a moulded article comprising a polyethylene composition. The polyethylene composition comprises

(A) from 65 to 93 wt%, based on the total weight of the polyethylene composition, of a multimodal high density polyethylene having a density of from 945 to 970 kg/m$^3$, determined according to ISO 1183, and a melt flow rate MFR$_2$ of 0.1 to 1.5 g/10 min, determined according to ISO 1133 at a temperature of 190°C and a load of 2.16 kg; wherein the multimodal high density polyethylene (A) comprises at least two polyethylene fractions (A-1) and (A-2)

(A-1) from 40 to 60 wt%, based on the total weight of the multimodal high density polyethylene (A), of a first polyethylene fraction having a density of from 955 to 980 kg/m$^3$, determined according to ISO 1183, and a melt flow rate MFR$_2$ of 50 to 600 g/10 min, determined according to ISO 1133 at a temperature of 190°C and a load of 2.16 kg; and
(A-2) from 40 to 60 wt%, based on the total weight of the multimodal high density polyethylene (A), of second polyethylene fraction having a density of from 943 to 970 kg/m$^3$, determined according to ISO 1183, and a melt flow rate MFR$_2$ of 0.00001 to 1.0 g/10 min, determined according to ISO 1133 at a temperature of 190°C and a load of 2.16 kg; and

(B) from 7 to 35 wt%, based on the total weight of the polyethylene composition, of a high density polyethylene having a density of from 955 to 980 kg/m$^3$, determined according to ISO 1183, and a melt flow rate MFR$_2$ of from

15 to 60 g/10 min, determined according to ISO 1133 at a temperature of 190°C and a load of 2.16 kg.

The moulded article is preferably not a monoaxially oriented film. The moulded article may be an injection moulded, blow moulded or compression moulded article. Preferably, the moulded article is an injection moulded or compression moulded article. More preferably, the moulded article is an injection moulded article.

According to a second aspect, there is provided a method of producing a moulded article as described herein. The method comprises moulding an article from a polyethylene composition comprising

(A) from 65 to 93 wt%, based on the total weight of the polyethylene composition, of a multimodal high density polyethylene having a density of from 945 to 970 kg/m$^3$, determined according to ISO 1183, and a melt flow rate MFR$_2$ of 0.1 to 1.5 g/10 min, determined according to ISO 1133 at a temperature of 190°C and a load of 2.16 kg; wherein the multimodal high density polyethylene (A) comprises at least two polyethylene fractions (A-1) and (A-2)

(A-1) from 40 to 60 wt%, based on the total weight of the multimodal high density polyethylene (A), of a first polyethylene fraction having a density of from 955 to 980 kg/m$^3$, determined according to ISO 1183, and a melt flow rate MFR$_2$ of 50 to 600 g/10 min, determined according to ISO 1133 at a temperature of 190°C and a load of 2.16 kg; and

(A-2) from 40 to 60 wt%, based on the total weight of the multimodal high density polyethylene (A), of second polyethylene fraction having a density of from 943 to 970 kg/m$^3$, determined according to ISO 1183, and a melt flow rate MFR$_2$ of 0.00001 to 1.0 g/10 min, determined according to ISO 1133 at a temperature of 190°C and a load of 2.16 kg; and

(B) from 7 to 35 wt%, based on the total weight of the polyethylene composition, of a high density polyethylene having a density of from 955 to 980 kg/m$^3$, determined according to ISO 1183, and a melt flow rate MFR$_2$ of from 15 to 60 g/10 min, determined according to ISO 1133 at a temperature of 190°C and a load of 2.16 kg.

According to another aspect, there is provided a polyethylene composition comprising

A) from 65 to 93 wt%, based on the total weight of the polyethylene composition, of a multimodal high density polyethylene having a density of from 945 to 970 kg/m$^3$, determined according to ISO 1183, and a melt flow rate MFR$_2$ of 0.1 to 1.5 g/10 min, determined according to ISO 1133 at a temperature of 190°C and a load of 2.16 kg; wherein the multimodal high density polyethylene (A) comprises at least two polyethylene fractions (A-1) and (A-2)

(A-1) from 40 to 60 wt%, based on the total weight of the multimodal high density polyethylene (A), of a first polyethylene fraction having a density of from 955 to 980 kg/m$^3$, determined according to ISO 1183, and a melt flow rate MFR$_2$ of 50 to 600 g/10 min, determined according to ISO 1133 at a temperature of 190°C and a load of 2.16 kg; and

(A-2) from 40 to 60 wt%, based on the total weight of the multimodal high density polyethylene (A), of second polyethylene fraction having a density of from 943 to 970 kg/m$^3$, determined according to ISO 1183, and a melt flow rate MFR$_2$ of 0.00001 to 1.0 g/10 min, determined according to ISO 1133 at a temperature of 190°C and a load of 2.16 kg;

B) from 7 to 35 wt%, based on the total weight of the polyethylene composition, of a high density polyethylene having a density of from 955 to 980 kg/m$^3$, determined according to ISO 1183, and a melt flow rate MFR$_2$ of from 15 to 60 g/10 min, determined according to ISO 1133 at a temperature of 190°C and a load of 2.16 kg, wherein the polyethylene composition has a z average molecular weight Mz of from 610000 to 670000 g/mol, preferably 620000 to 650000 g/mol.

**DEFINITIONS**

An 'ethylene homopolymer' denotes a polymer consisting of ethylene monomer units. Due to the requirements of large-scale polymerization it may be possible that the ethylene homopolymer includes minor amounts of comonomer units. Usually, the amount of comonomers present is below 0.1 mol%, preferably below 0.05 mol%, most preferably below 0.01 mol% of the ethylene homopolymer. Most preferably, a homopolymer contains no comonomer units.

A polymer is denoted 'ethylene copolymer' if the polymer is derived from ethylene monomer units and at least one alpha-olefin comonomer. The alpha-olefin comonomer preferably is selected from alpha-olefin comonomer with 3 to 8 carbon atoms, and more preferably 4 to 6 carbon atoms. The alpha-olefin comonomer may be selected from the group consisting of propene, 1-butene, 1-hexene, 1-octene and 4-methyl-pent-1-ene, or mixtures thereof. Preferred are the comonomers 1-hexene, 1-octene and 1-butene and particularly preferred is 1-butene.

Polyethylenes are usually classified by means of their density as low density e.g. as low density polyethylenes (LDPE), linear low density polyethylenes (LLDPE), medium density polyethylenes (MDPE) and high density polyethylenes (HDPE). In literature polyethylenes with a density of at least 940 kg/m$^3$ are usually classified as high density polyethylenes (HDPE).

A polyethylene comprising more than one fraction differing from each other in at least one property, such as weight average molecular weight or comonomer content, is called "multimodal". If the multimodal polyethylene composition includes two different fractions, it is called "bimodal". The form of the molecular weight distribution curve, i.e. the appearance of the graph of the polymer weight fraction as function of its molecular weight, of such a multimodal polyethylene composition will show two or more maxima depending on the modality or at least be distinctly broadened in comparison with the curves of the individual fractions.

In contrast to "multimodal" a unimodal polyethylene shows only one maximum in the graph of the polymer weight fraction as function of its molecular weight and a uniform comonomer distribution.

## DETAILED DESCRIPTION

According to a first aspect of the present disclosure, there is provided a moulded article comprising a polyethylene composition. The polyethylene composition comprises

(A) from 65 to 93 wt%, based on the total weight of the polyethylene composition, of a multimodal high density polyethylene having a density of from 945 to 970 kg/m$^3$, determined according to ISO 1183, and a melt flow rate MFR$_2$ of 0.1 to 1.5 g/10 min, determined according to ISO 1133 at a temperature of 190°C and a load of 2.16 kg; wherein the multimodal high density polyethylene (A) comprises at least two polyethylene fractions (A-1) and (A-2)

(A-1) from 40 to 60 wt%, based on the total weight of the multimodal high density polyethylene (A), of a first polyethylene fraction having a density of from 955 to 980 kg/m$^3$, determined according to ISO 1183, and a melt flow rate MFR$_2$ of 50 to 600 g/10 min, determined according to ISO 1133 at a temperature of 190°C and a load of 2.16 kg; and

(A-2) from 40 to 60 wt%, based on the total weight of the multimodal high density polyethylene (A), of second polyethylene fraction having a density of from 943 to 970 kg/m$^3$, determined according to ISO 1183, and a melt flow rate MFR$_2$ of 0.00001 to 1.0 g/10 min, determined according to ISO 1133 at a temperature of 190°C and a load of 2.16 kg; and

(B) from 7 to 35 wt%, based on the total weight of the polyethylene composition, of a high density polyethylene having a density of from 955 to 980 kg/m$^3$, determined according to ISO 1183, and a melt flow rate MFR$_2$ of from 15 to 60 g/10 min, determined according to ISO 1133 at a temperature of 190°C and a load of 2.16 kg.

The moulded article is preferably not a film. The moulded article is more preferably not a monoaxially oriented film. The moulded article may be an injection moulded, blow moulded or compression moulded article. Preferably, the moulded article is an injection moulded or compression moulded article. More preferably, the moulded article is an injection moulded article.

It has been found that the polyethylene composition of the present disclosure provides an improved material for moulding articles, particularly by injection or compression moulding. In the present disclosure, a multimodal high density polyethylene component

(A) having a relatively low melt flow rate is combined with a high density polyethylene component (B) having a relatively high melt flow rate. The multimodal high density polyethylene component (A) comprises a relatively high melt flow fraction (A-1) and a relatively low melt flow fraction (A-2). Surprisingly, the polyethylene composition of the present disclosure can provide an improved combination of stiffness, toughness and processability. For example, the polyethylene composition can provide desirable tensile strength in combination with desirable stress crack resistance and/or melt flow rate.

**Polyethylene composition**

The polyethylene composition comprises from 65 to 93 wt%, based on the total weight of the polyethylene composition, of the multimodal high density polyethylene (A) and from 7 to 35 wt%, based on the total weight of the polyethylene composition, of a second high density polyethylene (B).

It is preferred that the polyethylene composition comprises of from 70 to 90 wt%, more preferably from 70 to 85 wt%, even more preferably 75 to 85 wt. % based on the total weight of the polyethylene composition, of the multimodal high density polyethylene (A).

It is further preferred that the polyethylene composition comprises from 10 to 30 wt%, more preferably from 15 to 30 wt%, even more preferably from 15 to 25 wt%, based on the total weight of the polyethylene composition, of the second high density polyethylene (B).

The polyethylene composition can comprise further components different from the multimodal high density polyethylene (A) and the second high density polyethylene (B). Other components can be polymers different from the multimodal high density polyethylene (A) and the second high density polyethylene (B) or additives. Usually the amount of other components is not more than 10 wt%, based on the total weight of the polyethylene composition.

It is preferred that the polyethylene composition does not comprise any polymers different from the multimodal high density polyethylene (A) and the second high density polyethylene (B). Thus, it is preferred that the polymeric components of the polyethylene composition consist of the high density polyethylene (A) and the second high density polyethylene (B). In some examples, the sum of the total weight of the high density polyethylene (A) and the total weight of the high density polyethylene (B) is 95 to 100%, preferably 97 to 100%, more preferably 98 to 100% of the total weight of the polyethylene composition.

The polyethylene composition can comprise usual additives for utilization with polyolefins, such as stabilizers (e.g. antioxidant agents), acid scavengers and/or UV-stabilizers. Preferably, the amount of these additives is 5.0 wt% or below, more preferably 2.5 wt% or below, more preferably 1.0 wt% or below, of the polyethylene composition. The lower limit of the additives, if present, is usually 0.001 wt%, preferably 0.01 wt%.

Additives can be added to the polyethylene composition in form of masterbatches in which the additives are embedded in carrier polymers in concentrated form in order to ensure better distribution of the additives in the polyethylene composition. In the case that the additives are added in form of a masterbatch, the amount of carrier polymer is added to the amount of additives, not to the amount of polymeric components in the polyethylene composition.

The polyethylene composition may have a density of from 945 to 970 $kg/m^3$, preferably from 948 to 968 $kg/m^3$, more preferably from 950 to 965 $kg/m^3$, still more preferably from 952 to 962 $kg/m^3$, yet more preferably 955 to 960 $kg/m^3$ or 958 to 968 $kg/m^3$, determined according to ISO 1183.

Further, the polyethylene composition may have a melt flow rate $MFR_2$ of from 0.5 to 7.5 g/10 min, preferably from 0.7 to 5.0 g/10 min, more preferably from 0.8 to 4.0 g/10 min, still more preferably from 0.9 to 3.0 g/10 min, most preferably from 1.0 to 2.0 g/10 min or 1.1 to 1.8 g/10 min, determined according to ISO 1133 at a temperature of 190°C and a load of 2.16 kg.

The polyethylene composition may have a melt flow rate $MFR_{21}$ of 30 to 80 g/10min, preferably 40 to 75 g/10min, for example, 50 to 70 g/10min, determined according to ISO 1133 at a temperature of 190°C and a load of 21.6 kg.

The polyethylene composition preferably has a Flow Rate Ratio (FRR) of the $MFR_{21}/MFR_2$ of from 35 to 85, preferably from 45 to 75, still more preferably from 48 to 70.

The polyethylene composition preferably has a weight average molecular weight Mw of from 105000 to 140000 g/mol, more preferably from 110000 to 130000 g/mol, still more preferably from 115000 to 125000 g/mol.

The polyethylene composition preferably has a z average molecular weight Mz of from 580000 to 750000 g/mol, more preferably from 600000 to 700000 g/mol, still more preferably from 610000 to 670000 g/mol, and still more preferably 620000 to 650000 g/mol

The polyethylene composition preferably has a Mw/Mn ratio (MWD) of from 8 to 20, more preferably from 10 to 15, still more preferably from 11 to 13.

The polyethylene composition may have a tensile modulus measured according to ISO 527-2 of 800 to 1500 MPa, preferably 900 to 1400 MPa, more preferably 1000 to 1300 MPa, yet more preferably 1030 to 1200 MPa..

The polyethylene composition may have a tensile strength measured according to ISO 527-2 of 10 to 50 MPa, preferably 20 to 30 MPa.

The polyethylene composition may have an elongation at break measured according to ISO 527-2 of 300 to 800%, preferably 400 to 500%.

The polyethylene composition may have an environmental stress crack resistance (ESCR) measured according to ASTM D 1693 B of at least 40 hours, preferably at least 50 hours, for example, 55 to 90 hours.

The polyethylene composition is preferably produced by mixing the multimodal high density polyethylene (A) and the high density polyethylene (B) and optionally the further components as described above. These components can be mixed prior to the preparation of the article e.g. by melt mixing or compounding so that the polyethylene composition is obtained and can be stored before moulding. The components can also be mixed during moulding, e.g. by adding the components in the same or different hoppers into the production line.

The melt mixing or compounding device may be e.g. any conventionally used mixer or extruder, such as a twin screw extruder. As an example of an extruder for the present compounding step may be those supplied by Japan Steel works, Kobe Steel, Farrel-Pomini or Coperion, e.g. a ZSK extruder.

**Multimodal high density polyethylene (A)**

The multimodal high density polyethylene (A) may be a homopolymer or a copolymer, but is preferably an ethylene copolymer.

The comonomer contribution preferably is up to 10 % by mol, more preferably up to 5 % by mol. Ideally, however there are very low levels of comonomer present in the polymers of the present invention such as 0 to 2.0 mol%, e.g. 0.1 to 1.0 mol%.

The other copolymerizable monomer or monomers are preferably C3-12, especially C3-10, alpha olefin comonomers, particularly singly or multiply ethylenically unsaturated comonomers, in particular C3-10-alpha olefins such as propene, 1-butene, 1-hexene, 1-octene, and 4-methyl-pent-1-ene. The use of 1-hexene, 1-octene and 1-butene, or mixtures thereof, is particularly preferred, especially 1-hexene and 1-butene, most preferably 1-butene. Ideally, there is only one comonomer present.

The multimodal high density polyethylene (A) is multimodal and therefore comprises at least two components. The multimodal high density polyethylene (A) is preferably bimodal.

The multimodal high density polyethylene (A) comprises at least two polyethylene fractions (A-1) and (A-2). The first polyethylene fraction (A-1) may have a lower molecular weight than the second polyethylene fraction (A-2). The first polyethylene fraction (A-1) has a higher melt flow rate $MFR_2$ determined according to ISO 1133 at a temperature of 190°C and a load of 2.16 kg than the second polyethylene fraction (A-2).

Usually, a polyethylene comprising at least two polyethylene fractions, which have been produced under different polymerization conditions resulting in different (weight average) molecular weights and molecular weight distributions for the fractions, is referred to as "multimodal". The prefix "multi" relates to the number of different polymer fractions the composition is consisting of. The polyethylene may also be multimodal with respect to comonomer content. In some examples, the first polyethylene fraction (A-1) is an ethylene homopolymer, while the second polyethylene fraction is an ethylene copolymer (e.g. an ethylene-butene copolymer).

The form of the molecular weight distribution curve, i.e. the appearance of the graph of the polymer weight fraction as a function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

As mentioned above, the multimodal high density polyethylene (A) preferably is bimodal, i.e. the high density polyethylene (A) consists of the first polyethylene fraction (A-1) and the second polyethylene fraction (A-2).

The multimodal high density polyethylene (A) has a density of 945 to 970 $kg/m^3$. Preferable ranges for the density are from 950 to 968 $kg/m^3$, more preferably from 953 to 967 $kg/m^3$, measured according to ISO 1183. The density of the multimodal high density polyethylene (A) may be 955 to 965 $kg/m^3$, for example, 957 to 962 $kg/m^3$.

The multimodal high density polyethylene (A) has a melt flow rate $MFR_2$ of 0.1 to 1.5 g/10 min. Preferable ranges for the $MFR_2$ are from 0.1 to 1.3 g/10 min, more preferably from 0.2 to 1.2 g/10 min, still more preferably from 0.5 to 1.0 g/10 min, more preferably 0.6 to 0.8 g/10min determined according to ISO 1133 at a temperature of 190°C and a load of 2.16 kg.

The high density polyethylene (A) preferably has a melt flow rate $MFR_{21}$ of 15 to 75 g/10min, more preferably 20 to 65 g/10 min, still more preferably 30 to 55 g/10 min, determined according to ISO 1133 at a temperature of 190°C and a load of 21.6 kg.

The high density polyethylene (A) preferably has a Flow Rate Ratio (FRR) of the $MFR_{21}/MFR_2$ of from 35 to 85, preferably from 45 to 75, still more preferably from 50 to 70.

The high density polyethylene (A) preferably has a melting temperature Tm of from 125 to 140°C, more preferably from 128 to 138°C, for example, 130 to 135°C.

The high density polyethylene (A) preferably has a crystallization temperature Tc of from 105 to 130°C, more preferably from 110 to 127°C, still more preferably from 115 to 125°C.

The high density polyethylene (A) preferably has a melting enthalpy Hm of from 170 to 250 J/g, more preferably from 185 to 240 J/g, still more preferably from 200 to 225 J/g.

The high density polyethylene (A) preferably has a weight average molecular weight Mw of from 115000 to 140000 g/mol, more preferably from 120000 to 135000 g/mol, still more preferably from 125000 to 132000 g/mol.

The high density polyethylene (A) preferably has a z average molecular weight Mz of from 600000 to 750000 g/mol, more preferably from 625000 to 735000 g/mol, still more preferably from 650000 to 725000 g/mol.

The high density polyethylene (A) comprises at least a first polyethylene fraction (A-1) and a second polyethylene fraction (A-2). In one particularly preferable embodiment, the high density polyethylene (A) consists of fractions (A-1) and (A-2).

The weight ratio of fraction (A-1) to fraction (A-2) in the polyethylene composition (or high density multimodal polyethylene (A)) is in the range 40:60 to 60:40, more preferably 43:57 to 55:45, still more preferably 45:55 to 50:50.

The first polyethylene fraction (A-1) is preferably present in the high density polyethylene (A) in an amount of from 40 to 60 wt%, preferably from 43 to 55 wt% based on the total weight of the high density polyethylene (A).

The second polyethylene fraction (A-2) is present in the high density polyethylene (A) in an amount of from 40 to 60 wt%, preferably from 45 to 57 wt%, based on the total weight of the high density polyethylene (A).

The weight amounts of fractions (A-1) and (A-2) may add up to 100 % of the total weight of the high density multimodal polyethylene (A).

Each fraction (A-1) and fraction (A-2) may be an ethylene homopolymer or an ethylene copolymer. By ethylene homopolymer is meant a polymer comprising at least 97 mol% (such as at least 98 mol%, especially at least 99.5 mol%) ethylene monomer units. The term "ethylene copolymer" is defined above. Most preferably, fraction (A-1) is an ethylene homopolymer and fraction (A-2) is an ethylene copolymer.

The high density polyethylene (A) is produced in a multistage process wherein fractions (A-1) and (A-2) are produced in subsequent stages. In such a case, the properties of the fractions produced in the second step (or further steps) of the multistage process can either be inferred from polymers which are separately produced in a single stage by applying identical polymerization conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13.

Thus, although not directly measurable on the multistage process products, the properties of the fractions produced in higher stages of such a multistage process can be determined by applying either or both of the above methods. The skilled person will be able to select the appropriate method.

High density polyethylenes produced in a multistage process are also designated as "*in-situ*" blends. The resulting end product consists of an intimate mixture of the polymers from the two or more reactors, the different molecular-weight-distribution curves of these polymers together forming a molecular-weight-distribution curve having a broad maximum or two or more maxima, i.e. the end product is a multimodal polymer mixture

The first polyethylene fraction (A-1) has an $MFR_2$ of 50 to 600 g/10min, preferably from 150 to 500 g/10 min, more preferably from 200 to 400 g/10 min or 250 to 340 g/10 min, determined according to ISO 1133 at a temperature of 190°C and a load of 2.16 kg.

The first polyethylene fraction (A-1) has a density of 955 to 980 $kg/m^3$, preferably from 960 to 978 $kg/m^3$, more preferably from 965 to 975, determined according to ISO 1183.

The first polyethylene fraction (A-1) can be an ethylene homopolymer or copolymer. Preferably, Fraction (A-1) is an ethylene homopolymer.

The first polyethylene fraction (A-1) can have a weight average molecular weight, Mw, of 15000 to 35000 g/mol, preferably 20000 to 30000 g/mol.

The first polyethylene fraction (A-1) can have a number average molecular weight, Mn, of 3000 to 8000 g/mol, preferably 4000 to 6000 g/mol.

The first polyethylene fraction (A-1) can have a z average molecular weight, Mz, of 140000 to 200000 g/mol, preferably 150000 to 180000 g/mol.

The first polyethylene fraction (A-1) can have an Mw/Mn of 3 to 7, preferably 4 to 6. The first polyethylene fraction (A-1) can have an Mz/Mw of 5 to 9, for example, 6 to 8.

The second polyethylene fraction (A-2) has a melt flow rate $MFR_2$ of from 0.00001 to 1.0 g/10 min, preferably from 0.0001 to 0.5 g/10 min, more preferably from 0.0005 to 0.1 g/10 min, even more preferably 0.003 to 0.02 g/10 min, determined according to ISO 1133 at a temperature of 190°C and a load of 2.16 kg.

The second polyethylene fraction (A-2) has a density of 943 to 970 $kg/m^3$, preferably from 945 to 963 $kg/m^3$, more preferably from 945 to 960 $kg/m^3$, determined according to ISO 1183. In some embodiments, second polyethylene fraction (A-2) has a density of 943 to 949.5 $kg/m^3$ according to ISO 1183.

The second polyethylene fraction (A-2) can be an ethylene homopolymer or copolymer. The second polyethylene fraction (A-2) is preferably a copolymer. Preferred ethylene copolymers employ alpha-olefins (e.g. C3-12 alpha-olefins, preferably C4-C8 alpha-olefins) as comonomers. Examples of suitable alpha-olefins include 1-butene, 1-hexene and 1-octene. 1-butene is an especially preferred comonomer.

**Preparation of high density polyethylene (A)**

The multimodal high density polyethylene (A) may be produced by polymerization using conditions which create a multimodal (e.g. bimodal) polymer product ideally using a Ziegler Natta catalyst system. Typically, a two or more stage, i.e. multistage, polymerization process is used with different process conditions in the different stages or zones (e.g. different temperatures, pressures, polymerization media, hydrogen partial pressures, etc). Preferably, the multimodal (e.g. bimodal) composition is produced by a multistage polymerization, e.g. using a series of reactors, with optional comonomer addition preferably in only the reactor(s) used for production of the higher/highest molecular weight component(s). A multistage process is defined to be a polymerization process in which a polymer comprising two or more fractions is produced by producing each or at least two polymer fraction(s) in a separate reaction stage, usually with different reaction conditions in each stage, in the presence of the reaction product of the previous stage which comprises a polymerization catalyst. The polymerization reactions used in each stage may involve conventional ethylene homopolymerization or copolymerization reactions, e.g. gas-phase, slurry phase, liquid phase polymerizations, using conventional reactors, e.g. loop reactors, gas phase reactors, batch reactors etc. (see for example WO97/44371 and WO96/18662).

Preferably, the multimodal high density polyethylene (A) is a bimodal high density polyethylene (A) prepared in a two-stage polymerization process.

The first polymerization stage produces an ethylene homopolymer or an ethylene copolymer, typically an ethylene homopolymer, which is subsequently fed to the second polymerization stage.

The second polymerization stage can produce a further ethylene homopolymer, or an ethylene copolymer, preferably an ethylene copolymer.

The first polymerization stage is preferably a slurry polymerization step.

The slurry polymerization usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons. An especially preferred diluent is propane, possibly containing minor amounts of methane, ethane and/or butane.

The ethylene content in the fluid phase of the slurry may be from 0.5 to 50 % by mole, preferably from 1 to 20 % by mole and in particular from 2 to 10 % by mole. The benefit of having a high ethylene concentration is that the productivity of the catalyst is increased but the drawback is that more ethylene then needs to be recycled than if the concentration was lower.

The temperature in the first polymerization stage is typically from 60 to 110°C, preferably from 70 to 98°C. An excessively high temperature should be avoided to prevent partial dissolution of the polymer into the diluent and the fouling of the reactor. The pressure is generally from 1 to 150 bar, preferably from 40 to 80 bar.

The slurry polymerization may be conducted in any known reactor used for slurry polymerization. Such reactors include a continuous stirred tank reactor and a loop reactor. It is especially preferred to conduct the slurry polymerization in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654. It is thus preferred to conduct the first polymerization stage as a slurry polymerization in a loop reactor.

The slurry may be withdrawn from the reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460. It is preferred to withdraw the slurry from the first polymerization stage continuously.

Hydrogen is typically introduced into the first polymerization stage for controlling the MFR$_2$ of the resultant polymer. The amount of hydrogen needed to reach the desired MFR depends on the catalyst used and the polymerization conditions. The desired polymer properties may be obtained in slurry polymerization in a loop reactor with the molar ratio of hydrogen to ethylene of from 100 to 1000 mol/kmol (or mol/1000 mol) and preferably of from 200 to 800 mol/kmol.

The average residence time in the first polymerization stage is typically from 20 to 120 minutes, preferably from 30 to 80 minutes. As it is well known in the art the average residence time $\tau$ can be calculated from Equation 1 below:

Equation 1: Residence Time

$$\tau = \frac{V_R}{Q_o}$$

Where $V_R$ is the volume of the reaction space (in case of a loop reactor, the volume of the reactor, in case of the fluidized bed reactor, the volume of the fluidized bed) and $Q_o$ is the volumetric flow rate of the product stream (including the polymer product and the fluid reaction mixture).

The production rate is suitably controlled with the catalyst feed rate. It is also possible to influence the production rate by suitable selection of the monomer concentration. The desired monomer concentration can then be achieved by suitably adjusting the ethylene feed rate.

In the second polymerization stage, ethylene is polymerized, optionally together with at least one alpha-olefin comonomer, in the presence of the catalyst and the ethylene polymer produced in the first polymerization stage. It will thus be appreciated that the second polymerization stage generates an ethylene polymer, which combines with the ethylene polymer from the first polymerization stage, to form the multimodal high density polyethylene (A). Preferable comonomers are discussed hereinbefore, however it is noted that it is particularly preferable if the at least one alpha-olefin is butene.

The second polymerization stage is preferably a gas phase polymerization step, i.e. carried out in a gas-phase reactor. Any suitable gas phase reactor known in the art may be used, such as a fluidised bed gas phase reactor.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

A chain transfer agent (e.g. hydrogen) is typically added to the second polymerization stage, preferably in amounts of 50 to 500 mol of $H_2$/kmol ethylene.

The split between the first polymerization stage and the second polymerization stage (i.e. between the slurry polymerization and the gas phase polymerization) is typically 40:60 to 60:40, more preferably 43:57 to 55:45.

**Prepolymerization**

The polymerization steps discussed above may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is conducted in slurry.

Thus, the prepolymerization step may be conducted in a loop reactor. The prepolymerization is then preferably conducted in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons.

The temperature in the prepolymerization step is typically from 0 to 90°C, preferably from 20 to 80°C and more preferably from 55 to 75°C.

The pressure is not critical and is typically from 1 to 150 bar, preferably from 40 to 80 bar.

The amount of monomer is typically such that from 0.1 to 1000 grams of monomer per one gram of solid catalyst component is polymerized in the prepolymerization step. As the person skilled in the art knows, the catalyst particles recovered from a continuous prepolymerization reactor do not all contain the same amount of prepolymer. Instead, each particle has its own characteristic amount which depends on the residence time of that particle in the prepolymerization reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount of polymer produced in the prepolymerization typically lies within 1 - 5 wt% in respect to the final multimodal high density polyethylene (A).

**Catalyst**

The polymerization is typically conducted in the presence of a Ziegler-Natta polymerization catalyst. Suitable Ziegler-Natta (ZN) catalysts generally comprise at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), optionally a compound of group 13 of the Periodic Table (IUPAC), and optionally an internal organic compound, like an internal electron donor. A ZN catalyst may also comprise further catalyst component(s), such as a cocatalyst and optionally external additives.

Suitable ZN catalysts preferably contain a magnesium compound, an aluminium compound and a titanium compound supported on a particulate support.

The particulate support can be an inorganic oxide support, such as silica, alumina, titania, silica-alumina, silica-titania or a $MgCl_2$ based support. Preferably, the support is silica or a $MgCl_2$ based support.

Particularly preferred Ziegler-Natta catalysts are such as described in EP 1378528 A1.

If used, the magnesium compound preferably is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is a chlorine containing aluminium alkyl. Especially preferred compounds are aluminium alkyl dichlorides and aluminium alkyl sesquichlorides.

The transition metal compound of Group 4 to 6 is preferably a titanium or vanadium compound, more preferably a halogen containing titanium compound, most preferably chlorine containing titanium compound. An especially preferred titanium compound is titanium tetrachloride.

The catalyst can be prepared by sequentially contacting the carrier with the above mentioned compounds, as described in EP 688794 or WO 99/51646. Alternatively, it can be prepared by first preparing a solution from the components and then contacting the solution with a carrier, as described in WO 01/55230.

Another group of suitable ZN catalysts contain a titanium compound together with a magnesium halide compound acting as a support. Thus, the catalyst contains a titanium compound and optionally a Group 13 compound for example an aluminium compound on a magnesium dihalide, like magnesium dichloride. Such catalysts are disclosed, for instance, in WO 2005/118655, EP 810235, WO 2014/096296 and WO 2016/097193.

Suitable activators are group 13 metal compounds, typically group 13 alkyl compounds and especially aluminium alkyl compounds, where the alkyl group contains 1 to 16 C-atoms. These compounds include trialkyl aluminium compounds, such as trimethylaluminium, triethylaluminium, tri-isobutylaluminium, trihexylaluminium and tri-n-octylaluminium, alkyl aluminium halides, such as ethylaluminium dichloride, diethylaluminium chloride, ethylaluminium sesquichloride, dimethylaluminium chloride and the like. Especially preferred activators are trialkylaluminiums, of which triethylaluminium, trimethylaluminium and tri-isobutylaluminium are particularly used.

The amount in which the activator is used depends on the specific catalyst and activator. Typically triethylaluminium is used in such amount that the molar ratio of aluminium to the transition metal, like Al/Ti, is from 1 to 1000, preferably from 3 to 100 and in particular from about 5 to about 30 mol/mol.

An optional internal organic compound may be chosen from the following classes: ethers, esters, amines, ketones, alcohols, anhydrides or nitriles or mixtures thereof. Preferably, the optional internal organic compound is selected from ethers and esters, most preferably from ethers. Preferred ethers are of 2 to 20 carbon-atoms and especially mono, di or multi cyclic saturated or unsaturated ethers comprising 3 to 6 ring atoms. Typical cyclic ethers suitable in the present invention, if used, are tetrahydrofuran (THF), substituted THF, like 2-methyl THF, di-cyclic ethers, like 2,2-di(2-tetrahydrofuryl)propane, 2,2-di-(2-furan)-propane, or isomers or mixtures thereof. Internal organic compounds are also often called as internal electron donors.

## High density polyethylene (B)

The second high density polyethylene (B) has a density of from 955 to 980 kg/m$^3$, preferably from 955 to 970 kg/m$^3$, more preferably from 957 to 967 kg/m$^3$ determined according to ISO 1183.

The second high density polyethylene (B) has a melt flow rate MFR$_2$ of from 15 to 60 g/10min, preferably from 20 to 50 g/10min, more preferably from 20 to 40 g/10min, determined according to ISO 1133 at a temperature of 190°C and a load of 2.16 kg.

It is preferred that the second high density polyethylene (B) has one or more, preferably all of the following properties:

**[0118]** - a weight average molecular weight Mw of from 30000 to 100000 g/mol, preferably from 40000 to 75000 g/mol, more preferably from 45000 to 60000 g/mol;

**[0119]** - a z average molecular weight Mz of from 175000 to 350000 g/mol, preferably from 200000 to 325000 g/mol, more preferably from 225000 to 300000 g/mol;

**[0120]** - a Mw/Mn ratio of from 2.5 to 8.5, preferably from 3.0 to 7.0, more preferably from 4.0 to 6.0; and/or a Mz/Mw ratio of from 2.5 to 8.5, preferably from 3.5 to 7.5, more preferably from 4.0 to 6.5.

The second high density polyethylene (B) may be a homopolymer or a copolymer, but is preferably an ethylene copolymer.

The comonomer contribution preferably is up to 10 % by mol, more preferably up to 5 % by mol. Ideally, however there are very low levels of comonomer present in the polymers of the present invention such as 0 to 3.0 mol%, or 0 to 1.0 mol%.

The other copolymerizable monomer or monomers are preferably C3-12, especially C3-10, alpha olefin comonomers, particularly singly or multiply ethylenically unsaturated comonomers, in particular C3-10-alpha olefins such as propene, 1-butene, 1-hexene, 1-octene, and 4-methyl-pent-1-ene. The use of 1-hexene, 1-octene and 1-butene, or mixtures thereof, is particularly preferred, especially 1-hexene and 1-butene, most preferably 1-butene. Ideally, there is only one comonomer present.

The second high density polyethylene (B) preferably is unimodal.

The second high density polyethylene (B) can be produced in a single polymerization stage or a multistage polymerization process as outlined above for the multimodal high density polyethylene (A).

In the case of a unimodal high density polyethylene the same polymerization conditions must be used in all polymerization stages of a multistage polymerization process.

Suitable polymerization catalysts are e.g. Ziegler Natta catalysts or metallocene catalyst. For obtaining broader Mw/Mn ratios, thereby Ziegler-Natta catalysts are preferred.

Commercially available high density polyethylenes, meeting the properties as described above or below can also be used as second high density polyethylene (B).

**Applications**

Preferably, the moulded article may be an injection or compression moulded article, preferably a cap or closure. Preferably, the moulded article is an injection moulded article. Other moulded articles include blow-moulded articles. The moulded article may be a film, although this is not preferred. The moulded article is preferably not a film. The moulded article is preferably not a monoaxially oriented film.

A monoaxially oriented film is a film that is stretched only in one direction. The polyethylene chains thereby are oriented in stretching direction. Excluded from the scope of the monoaxially oriented film according to the present invention are biaxially oriented films, i.e. films which are stretched in two directions, i.e. in machine direction and transverse direction.

Injection moulding may be carried out using any conventional injection moulding equipment. A typical injection moulding process may be carried out a temperature of 190 to 275°C.

**EXAMPLES**

The present invention will now be described in further detail by the examples provided below. The following definitions of terms and determination methods apply for the above general description of the invention as well as to the below examples unless otherwise defined.

***Measurement methods***

**Melt flow rate**

The melt flow rate (MFR) was determined according to ISO 1133 and is indicated in g/10 min. The higher the melt flow rate, the lower the viscosity of the polymer. The MFR is determined at 190°C for polyethylene and at a loading of 2.16 kg ($MFR_2$), 5.00 kg ($MFR_5$) or 21.6 kg ($MFR_{21}$). In general, a lower MFR corresponds to a higher average molecular weight and vice versa.

The quantity FRR (flow rate ratio) is an indication of molecular weight distribution and denotes the ratio of flow rates at different loadings. Thus, FRR21/2 denotes the value of $MFR_{21}/MFR_2$.

**Calculation of melt flow rate $MFR_2$ of fractions (A-1) and (A-2):**

$$logA = x \cdot logB + (1 - x) \cdot logC$$

$$C = 10^{\wedge} \frac{(logA - x.logB)}{(1-x)}$$

wherein

B    MFR$_2$ of Fraction (A-1)
C    MFR$_2$ of Fraction (A-2)
A    final MFR$_2$ (mixture) of multimodal high density polyethylene (A)
X    weight fraction of Fraction (A)

**Density**

Density of the polymer was measured according to ISO 1183-1:2004 (method A) on compression moulded specimen prepared according to EN ISO 1872-2 (Feb 2007) and is given in kg/m$^3$.

**Calculation of density of polymer fractions**

$$\rho_2 = \frac{(\rho_{1+2} - \rho_1)\dfrac{1 - w_2}{100}}{w_2}$$

wherein

w2    is the weight fraction [wt%] of a polymer fraction 2,
$\rho$1    is the density [kg/m$^3$] of the polymer fraction 1,
$\rho$1+2    is the density [kg/m$^3$] of the combined fractions 1 and 2,
$\rho$2    is the calculated density [kg/m$^3$] of the polymer fraction 2.

**Molecular weight properties**

Molecular weight averages (Mz, Mw and Mn), Molecular weight distribution (MWD) and its broadness, described by polydispersity index, PDI=Mw/Mn (wherein Mn is the number average molecular weight and Mw is the weight average molecular weight) were determined by Gel Permeation Chromatography (GPC) according to ISO 16014-4:2003 and ASTM D 6474-99 using the following formulas:

$$M_n = \frac{\sum_{i=1}^{N} A_i}{\sum (A_i/M_i)}$$

$$M_w = \frac{\sum_{i=1}^{N} (A_i \; x \; M_i)}{\sum A_i}$$

$$M_z = \frac{\sum_{i=1}^{N} (A_i \; x \; M_i^2)}{\sum (A_i/M_i)}$$

For a constant elution interval ∆Vi, where Ai and Mi are the chromatographic peak slice area and polyolefin molecular weight (MW), respectively associated with the elution volume, Vi, where N is equal to the number of data points obtained from the chromatogram between the integration limits.
A PolymerChar GPC instrument, equipped with infrared (IR) detector was used with 3x Olexis and 1x Olexis Guard columns from Polymer Laboratories and 1,2,4-trichlorobenzene (TCB, stabilized with 250 mg/l 2,6-Di-tert-butyl-4-methyl-phenol) as solvent at 160 °C and at a constant flow rate of 1 ml/min. 200 $\mu$L of sample solution were injected per analysis. The column set was calibrated using universal calibration (according to ISO 16014-2:2003) with at least 15 narrow MWD polystyrene (PS) standards in the range of 0.5 to 11500 kg/mol. Mark Houwink constants used for PS, PE and PP are as described per ASTM D 6474-99. All samples were prepared by dissolving 5.0 to 9.0 mg of polymer in 8 ml (at 160 °C) of stabilized TCB (same as mobile phase) for 2.5 hours for PP or 3 hours for PE at 160 °C under continuous gentle shaking in the autosampler of the GPC instrument.

**Tensile modulus and tensile strength and elongation at break**

The tensile properties (tensile modulus, tensile strength, elongation at break) were determined according to ISO 527-2 on 1A ISO 527-2 dog-bones. Following the standard, a test speed of 1 mm/min was used for tensile modulus and 50 mm/min for all other properties. The testing temperature was $23\pm2$°C. Injection moulding was carried out according to ISO 17855-2.

**Environmental Stress Crack Resistance (ESCR)**

Environmental Stress Crack Resistance (ESCR) was tested with the Bell test according to ASTM D 1693 with 10% Igepal CO-630 at 50°C according to method B. The specimens used for testing were prepared by compression moulding according to ISO 17855-2 for PE. The compression moulded sheets had a thickness of 1.84 mm to 1.97 mm.

*Materials*

Set out below are Examples !E1 and IE2 and Comparative Example CE1. The base resin of CE1 was prepared and pelletized as described in Table 1 below.

The catalyst used in Examples !E1 and IE2 and Comparative Example CE1 was prepared in accordance with Example 1 of EP 1378528 A1

*Table 1*

| Example | | CE1 |
|---|---|---|
| **Prepolymerization reactor** | | |
| Temperature | °C | 70 |
| Pressure | kPa | 5685 |
| C2 | kg/h | 2.0 |
| H2 | g/h | 5.00 |
| C4 | g/h | 80.0 |
| Split | % | 1.5 |
| **First loop reactor** | | |
| Temperature | °C | 95 |
| Pressure | kPa | 5365 |
| H2/C2 ratio | mol/kmol | 334.64 |
| C4/C2 ratio | mol/kmol | 9.24 |
| Split | wt% | 45.7 |
| **Density** | kg/m$^3$ | **969.6** |
| **MFR$_2$** | g/10 min | **320.0** |
| **Gas phase reactor** | | |
| Temperature | °C | 85 |
| Pressure | kPa | 2000 |

(continued)

| Gas phase reactor | | |
|---|---|---|
| H2/C2 ratio | mol/kmol | **131.89** |
| C4/C2 ratio | mol/kmol | **8.33** |
| Split | wt% | 52.8 |
| **Pellet** | | |
| **MFR$_2$** | g/10 min | **1.27** |
| **MFR$_5$** | g/10 min | **4.52** |
| **MFR$_{21}$** | g/10 min | 77.40 |

The resins of Examples IE1 and IE2 comprise Component (A) and Component (B), details of which are set out below.

### Component (A) - multimodal HDPE

In a prepolymerization stage a first loop reactor having a volume of 50 dm$^3$ was operated at 70°C and 64 bar pressure. For producing a prepolymerization fraction, 2 kg/h ethylene, and 2 g/h of hydrogen were added. In addition, the polymerization catalyst was introduced into the reactor at a rate of 11 g/h and triethylaluminium (TEA) cocatalyst was introduced into the reactor at a rate of 22 g/h. The conditions in the reactor as shown in Table 2.

The polymer slurry was withdrawn from the first loop reactor and transferred into a loop reactor having a volume of 500 dm$^3$. This second loop reactor was operated at 95°C and 64 bar pressure. Into the reactor were introduced ethylene and hydrogen so that the ratio of hydrogen to ethylene (H2/C2) in the reactor was 456 mol/kmol. No additional catalyst feed or comonomer feed was introduced into the reactor. The conditions in the reactor as shown in Table 2.

The polymer slurry was withdrawn from the second loop reactor and transferred into a flash vessel operated at 3 bar pressure and 70°C temperature where the hydrocarbons were substantially removed from the polymer. The polymer was then introduced into a gas phase reactor operated at a temperature of 85°C and a pressure of 20 bar. In addition ethylene, 1 -butene and hydrogen were introduced into the reactor so that the ratio of hydrogen to ethylene (H2/C2) in the reactor was 110 mol/kmol and the ratio of 1-butene to ethylene (C4/C2) in the reactor was 18.8 mol/kmol. The conditions are shown in Table 2.

The resulting polymer was purged with nitrogen (about 50 kg/h) for one hour, stabilised with 1000 ppm of Irganox 1010 and Irgafos 168 and 1000 ppm Ca-stearate and then extruded to pellets in a counter-rotating twin screw extruder so that the throughput was 223 kg/h and the screw speed was 323 rpm.

*Table 2*

| Example | | Component A |
|---|---|---|
| **Prepolymerization reactor** | | |
| Temperature | °C | 70 |
| Pressure | bar | 64 |
| Split | % | 1.6 |
| **First loop reactor** | | |
| Temperature | °C | 95 |
| Pressure | bar | 64 |
| H2/C2 ratio | mol/kmol | 456 |
| C2 concentration | mol% | 2.8 |
| Production rate | kg/h | 37.6 |
| Split | wt% | 43.4 |
| MFR$_2$ | g/10min | 280 |

(continued)

| First loop reactor | | |
|---|---|---|
| Density | kg/m$^3$ | 972 |
| Mw | g/mol | 26750 |
| Mn | g/mol | 5050 |
| Mz | g/mol | 173900 |
| Mw/Mn | | 5.3 |
| Mz/Mw | | 6.5 |
| Gas phase reactor | | |
| Temperature | °C | 85 |
| Pressure | bar | 20 |
| H2/C2 ratio | mol/kmol | 110 |
| C4/C2 ratio | mol/kmol | 18.8 |
| C2 concentration | mol% | 15 |
| C4 concentration | mol% | 0.4 |
| Production rate | kg/h | 46 |
| Split | wt% | 55 |
| Density | kg/m$^3$ | 947.5 |
| MFR$_2$ | g/10 min | 0.005 |
| Density (overall) | kg/m$^3$ | 959.5 |
| MFR$_2$ (overall) | g/10 min | 0.70 |

### Component (B)

Component (B) was produced in single gas phase reactor, with a Ziegler-Natta catalyst, details of which are described in EP1780225A1. The polymerization condition may be adjusted by man skilled in the art. Typical conditions are shown in Table 3. Component (B) was pelletized with 1000 ppm of Irganox B225 (supplied by BASF), 700 ppm calcium stearate (CEASIT FI, supplied by Baerlocher) in a twin screw extruder. Component (B) has a melt flow rate MFR$_2$ of 30 g/10 min, a density of 960 kg/m$^3$. It has a Mz of 255000 g/mol, a Mw of 52575 g/mol, and a Mw/Mn ratio of 4.96.

*Table 3*

| | Unit | Component (B) |
|---|---|---|
| **Reactor pressure** | bar | 21 |
| **Temperature** | °C | 105 |
| **Ethylene partial pressure** | bar | 7 |
| **Butene concentration** | C4/C2*100 | 2.4 |
| **Hydrogen concentration** | H2/C2*100 | 50 |

### Preparation of composition

Component (A) and Component (B) in the amounts given in Table 4 were compounded in a mixer for inventive examples IE1 and IE2.
The blending of the components was performed using a twin screw extruder.

*Table 4*

|  |  | CE1 | IE1 | IE2 |
|---|---|---|---|---|
| **Composition** |  |  |  |  |
| Component (A) | wt% | 100 | 85 | 80 |
| Component (B) | wt% |  | 15 | 20 |
| Properties of composition |  |  |  |  |
| $MFR_2$ of composition | g/10min | 1.2 | 1.1 | 1.2 |
| $MFR_{21}$ of composition | g/10min | 77.4 | 55.4 | 67.2 |
| Ratio of $MFR_{21}$ / $MFR_2$ |  | 64.5 | 50.3 | 56.0 |
| Density of composition | kg/m3 | 962.5 | 960 | 959.9 |
| Mw |  | 119000 | 119500 | 116500 |
| Mz |  | 643500 | 621500 | 646000 |
| MWD |  | 11.52 | 11.99 | 11.53 |
| Tensile Modulus (Tm) | MPa | 1028 | 1037 | 1042 |
| Tensile Strength (Ts) | MPa | 25.91 | 25.15 | 25.16 |
| Elongation at break | % | 531.2 | 458.97 | 466.27 |
| ESCR | h | 39 | 60 | 66 |

The polyethylene compositions of IE1 and IE2 exhibit slightly higher stiffnesses compared to CE1 despite having slightly lower densities than CE1. Furthermore, the stress crack resistance (ESCR) of IE1 and IE2 are significantly higher than that of CE1. The polyethylene compositions of IE1 and IE2 provide an improved balance of stiffness, flow and stress crack resistance (ESCR) properties over CE1.

**Claims**

1.   A moulded article comprising a polyethylene composition, said polyethylene composition comprising

(A) from 65 to 93 wt%, based on the total weight of the polyethylene composition, of a multimodal high density polyethylene having a density of from 945 to 970 kg/m$^3$, determined according to ISO 1183, and a melt flow rate $MFR_2$ of 0.1 to 1.5 g/10 min, determined according to ISO 1133 at a temperature of 190°C and a load of 2.16 kg;
wherein the multimodal high density polyethylene (A) comprises at least two polyethylene fractions (A-1) and (A-2)

(A-1) from 40 to 60 wt%, based on the total weight of the multimodal high density polyethylene (A), of a first polyethylene fraction having a density of from 955 to 980 kg/m$^3$, determined according to ISO 1183, and a melt flow rate $MFR_2$ of 50 to 600 g/10 min, determined according to ISO 1133 at a temperature of 190°C and a load of 2.16 kg; and
(A-2) from 40 to 60 wt%, based on the total weight of the multimodal high density polyethylene (A), of second polyethylene fraction having a density of from 943 to 970 kg/m$^3$, determined according to ISO 1183, and a melt flow rate $MFR_2$ of 0.00001 to 1.0 g/10 min, determined according to ISO 1133 at a temperature of 190°C and a load of 2.16 kg;

(B) from 7 to 35 wt%, based on the total weight of the polyethylene composition, of a high density polyethylene having a density of from 955 to 980 kg/m$^3$, determined according to ISO 1183, and a melt flow rate $MFR_2$ of from 15 to 60 g/10 min, determined according to ISO 1133 at a temperature of 190°C and a load of 2.16 kg.

2.   A moulded article as claimed in claim 1, i) which is not a monoaxially oriented film, and/or ii) which is an injection moulded, blow moulded or compression moulded article, preferably an injection moulded article.

3. A moulded article as claimed in any one of the preceding claims, wherein the polyethylene composition has a melt flow rate $MFR_2$ of 0.5 to 7.5 g/10 min, preferably 0.7 to 5.0 g/10 min, more preferably from 0.8 to 4.0 g/10 min, still more preferably 0.9 to 3.0 g/10 min, yet more preferably from 1.0 to 2.0 g/10 min, even more preferably 1.1 to 1.8g/10 min, determined according to ISO 1133 at a temperature of 190°C and a load of 2.16 kg.

4. A moulded article as claimed in any one of the preceding claims, wherein the polyethylene composition has a melt flow rate $MFR_{21}$ of 30 to 80 g/10 min, preferably 40 to 75 g/10 min, more preferably 50 to 70 g/10 min, determined according to ISO 1133 at a temperature of 190°C and a load of 21.6 kg; and/or a flow rate ratio $FRR_{21/2}$, being the ratio of $MFR_{21}$ to $MFR_2$, of from 35 to 85, preferably from 45 to 75, more preferably from 48 to 70.

5. A moulded article as claimed in any one of the preceding claims, wherein the polyethylene composition has a density of 945 to 970 kg/m$^3$, preferably 948 to 968 kg/m$^3$, more preferably 950 to 965 kg/m$^3$, still more preferably 952 to 962 kg/m$^3$, yet more preferably 955 to 960 kg/m$^3$ or 958 to 968 kg/m$^3$, determined according to ISO 1183.

6. A moulded article as claimed in any one of the preceding claims, wherein the polyethylene composition has a tensile modulus of 800 to 1500 MPa, preferably 900 to 1400 MPa, more preferably 1000 to 1300 MPa, yet more preferably 1030 to 1200 MPa, measured at 23°C according to ISO 527-2 and an ESCR of at least 50 hours according to ASTM 1693-B.

7. A moulded article as claimed in any one of the preceding claims, wherein the polyethylene composition comprises component (A) in an amount from 70 to 90 wt%, more preferably from 70 to 85 wt%, even more preferably 75 to 85 wt% based on the total weight of the polyethylene composition.

8. A moulded article as claimed in any one of the preceding claims, wherein the multimodal high density polyethylene (A) has a density of 950 to 968 kg/m$^3$, preferably 953 to 967 kg/m$^3$, still more preferably 955 to 965 kg/m$^3$, even more preferably 957 to 962 kg/m$^3$, determined according to ISO 1183.

9. A moulded article as claimed in any one of the preceding claims, wherein the polyethylene composition comprises component (B) in an amount of 10 to 30 wt%, preferably 15 to 30 wt%, more preferably from 15 to 25 wt%, based on the total weight of the polyethylene composition.

10. A moulded article as claimed in any one of the preceding claims, wherein the component (B) has a density of 955 to 970 kg/m$^3$, preferably from 957 to 967 kg/m$^3$, determined according to ISO 1183, and/or a melt flow rate $MFR_2$ of from 20 to 50 g/10 min, preferably from 20 to 40 g/10 min, determined according to ISO 1133 at a temperature of 190°C and a load of 2.16 kg.

11. A moulded article as claimed in any one of the preceding claims, wherein the polyethylene fraction (A-1) has a density of from 960 to 978 kg/m$^3$, preferably from 965 to 975 kg/m$^3$, determined according to ISO 1183; and/or a melt flow rate $MFR_2$ of 150 to 500 g/10 min, preferably of 200 to 400 g/10 min, more preferably of 250 to 340 g/10 min, determined according to ISO 1133 at a temperature of 190°C and a load of 2.16 kg.

12. A moulded article as claimed in any one of the preceding claims, wherein the polyethylene fraction (A-2) has a density of from 945 to 963 kg/m$^3$, preferably from 945 to 960 kg/m$^3$, more preferably from 943 to 949.5 kg/m$^3$, determined according to ISO 1183; and/or has melt flow rate $MFR_2$ of 0.0001 to 0.5 g/10 min, preferably of 0.0005 to 0.1 g/10 min, more preferably of 0.003 to 0.02 g/10 min, determined according to ISO 1133 at a temperature of 190°C and a load of 2.16 kg.

13. A moulded article as claimed in any one of the preceding claims, wherein the weight ratio of the polyethylene fraction (A-1) to the polyethylene fraction (A-2) in the multimodal high density polyethylene (A) is 40:60 to 60:40, preferably 43:57 to 55:45, still more preferably 45:55 to 50:50.

14. A method of producing a moulded article according to any one of the preceding claims, which comprises moulding an article from a polyethylene composition comprising

(A) from 65 to 93 wt%, based on the total weight of the polyethylene composition, of a multimodal high density polyethylene having a density of from 945 to 970 kg/m$^3$, determined according to ISO 1183, and a melt flow

rate $MFR_2$ of 0.1 to 1.5 g/10 min, determined according to ISO 1133 at a temperature of 190°C and a load of 2.16 kg;

wherein the multimodal high density polyethylene (A) comprises at least two polyethylene fractions (A-1) and (A-2)

(A-1) from 40 to 60 wt%, based on the total weight of the multimodal high density polyethylene (A), of a first polyethylene fraction having a density of from 955 to 980 kg/m$^3$, determined according to ISO 1183, and a melt flow rate $MFR_2$ of 50 to 600 g/10 min, determined according to ISO 1133 at a temperature of 190°C and a load of 2.16 kg; and

(A-2) from 40 to 60 wt%, based on the total weight of the multimodal high density polyethylene (A), of second polyethylene fraction having a density of from 943 to 970 kg/m$^3$, determined according to ISO 1183, and a melt flow rate $MFR_2$ of 0.00001 to 1.0 g/10 min, determined according to ISO 1133 at a temperature of 190°C and a load of 2.16 kg;

(B) from 7 to 35 wt%, based on the total weight of the polyethylene composition, of a high density polyethylene having a density of from 955 to 980 kg/m$^3$, determined according to ISO 1183, and a melt flow rate $MFR_2$ of from 15 to 60 g/10 min, determined according to ISO 1133 at a temperature of 190°C and a load of 2.16 kg.

15. A polyethylene composition comprising

(A) from 65 to 93 wt%, based on the total weight of the polyethylene composition, of a multimodal high density polyethylene having a density of from 945 to 970 kg/m$^3$, determined according to ISO 1183, and a melt flow rate $MFR_2$ of 0.1 to 1.5 g/10 min, determined according to ISO 1133 at a temperature of 190°C and a load of 2.16 kg;

wherein the multimodal high density polyethylene (A) comprises at least two polyethylene fractions (A-1) and (A-2)

(A-1) from 40 to 60 wt%, based on the total weight of the multimodal high density polyethylene (A), of a first polyethylene fraction having a density of from 955 to 980 kg/m$^3$, determined according to ISO 1183, and a melt flow rate $MFR_2$ of 50 to 600 g/10 min, determined according to ISO 1133 at a temperature of 190°C and a load of 2.16 kg; and

(A-2) from 40 to 60 wt%, based on the total weight of the multimodal high density polyethylene (A), of second polyethylene fraction having a density of from 943 to 970 kg/m$^3$, determined according to ISO 1183, and a melt flow rate $MFR_2$ of 0.00001 to 1.0 g/10 min, determined according to ISO 1133 at a temperature of 190°C and a load of 2.16 kg;

(B) from 7 to 35 wt%, based on the total weight of the polyethylene composition, of a high density polyethylene having a density of from 955 to 980 kg/m$^3$, determined according to ISO 1183, and a melt flow rate $MFR_2$ of from 15 to 60 g/10 min, determined according to ISO 1133 at a temperature of 190°C and a load of 2.16 kg, wherein the polyethylene composition has a z average molecular weight Mz of from 610000 to 670000 g/mol, preferably 620000 to 650000 g/mol.

Europäisches
Patentamt

European
Patent Office

Office européen
des brevets

# EUROPEAN SEARCH REPORT

Application Number

EP 23 17 0828

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 239 015 A1 (BOREALIS AG [AT]) 6 September 2023 (2023-09-06) * the whole document * | 14,15 | INV. C08F210/16 C08L23/08 |
| X | EP 3 800 221 A1 (BOREALIS AG [AT]) 7 April 2021 (2021-04-07) * example HDPE1; table 2 * | 1-15 | |
| A | EP 4 163 309 A1 (BOREALIS AG [AT]) 12 April 2023 (2023-04-12) * the whole document * | 1-15 | |
| A | US 2010/105839 A1 (MEHTA SAMEER D [US]) 29 April 2010 (2010-04-29) * examples 1-5 * | 1-15 | |

**TECHNICAL FIELDS SEARCHED (IPC)**

B29C
B65D
C08F
C08L

The present search report has been drawn up for all claims

| Place of search | Date of completion of the search | Examiner |
|---|---|---|
| Munich | 4 October 2023 | Balmer, J |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons

& : member of the same patent family, corresponding
　document

EPO FORM 1503 03.82 (P04C01)

**ANNEX TO THE EUROPEAN SEARCH REPORT
ON EUROPEAN PATENT APPLICATION NO.**

EP 23 17 0828

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2023

| Patent document cited in search report | | Publication date | Patent family member(s) | | Publication date |
|---|---|---|---|---|---|
| EP 4239015 | A1 | 06-09-2023 | NONE | | |
| EP 3800221 | A1 | 07-04-2021 | EP | 3800221 A1 | 07-04-2021 |
| | | | WO | 2021064127 A1 | 08-04-2021 |
| EP 4163309 | A1 | 12-04-2023 | NONE | | |
| US 2010105839 | A1 | 29-04-2010 | BR | PI0919854 A2 | 15-12-2015 |
| | | | CN | 102197082 A | 21-09-2011 |
| | | | CN | 106467632 A | 01-03-2017 |
| | | | EP | 2365995 A1 | 21-09-2011 |
| | | | RU | 2011120328 A | 27-11-2012 |
| | | | US | 2010105839 A1 | 29-04-2010 |
| | | | US | 2016032088 A1 | 04-02-2016 |
| | | | WO | 2010047743 A1 | 29-04-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014180989 A1
- WO 2017093390 A1
- WO 2019229209 A
- EP 2746334 A
- WO 9744371 A
- WO 9618662 A
- US 4582816 A
- US 3405109 A
- US 3324093 A
- EP 479186 A
- US 5391654 A
- US 3374211 A
- US 3242150 A
- EP 1310295 A
- EP 891990 A

- EP 1415999 A
- EP 1591460 A
- WO 2007025640 A
- WO 9619503 A
- WO 9632420 A
- EP 1378528 A1
- EP 688794 A
- WO 9951646 A
- WO 0155230 A
- WO 2005118655 A
- EP 810235 A
- WO 2014096296 A
- WO 2016097193 A
- EP 1780225 A1

**Non-patent literature cited in the description**

- **B. HAGSTRÖM.** *Conference on Polymer Processing (The Polymer Processing Society), Extended Abstracts and Final Programme,* 19 August 1997, vol. 4, 13